# EUROPÄISCHE PATENTSCHRIFT

(11) **EP 1 712 820 B1**
(45) Veröffentlichungstag und Bekanntmachung des Hinweises auf die Patenterteilung: **13.05.2009**
(21) Anmeldenummer: 06006219.7
(22) Anmeldetag: 27.03.2006
(51) Int. Cl.: F16K 27/10

(54) **Kugelhahngehäuse**
Ball valve housing
Boîtier de robinet à boisseau sphérique

(30) Priorität: 13.04.2005 DE 102005017168
(43) Veröffentlichungstag der Anmeldung: 18.10.2006
(73) Patentinhaber: Klinger AG, 6300 Zug (CH)
(72) Erfinder: Loidl, Helmut, Ing., 2393 Sparbach 107 (AT); Spasojevic, Biljana, Dipl.-Ing., 2700 Wiener Neustadt (AT); Wöber, Michael, Ing., 1130 Wien (AT)
(74) Vertreter: Spierenburg, Pieter

(56) Entgegenhaltungen:
- EP-A- 0 372 202
- CH-A- 644 677
- DE-U1- 20 305 266
- US-A- 4 214 732
- US-A- 5 901 946
- US-B1- 6 302 132

## Beschreibung

Die Erfindung betrifft ein Kugelhahngehäuse nach dem Oberbegriff des Anspruchs 1.

Aus DE 29 09 106 A ist ein Kugelhahngehäuse aus umgeformten Rohren bekannt, die miteinander, mit eingesetzten Guß- oder Schmiedeteilen wie etwa Buchsen sowie mit einem aufgesetzten Dom verschweißt sind. Zum Umformen der Rohre sind jedoch besondere Stanz- und Biegewerkzeuge erforderlich. Zudem sind die Toleranzen bei Standardbauteilen aus dem Rohrleitungsbau wie etwa Rohren, Buchsen, T-Stücken usw. in der Praxis zu hoch, so daß paßgenaue Bauteile verwendet werden müssen. Die Herstellung des bekannten Kugelhahngehäuses ist daher aufwendig und teuer. Ferner sind mehrere Schweißnähte erforderlich, wodurch sich eine erhebliche Wärmebelastung während des Schweißvorgangs und eine Überlagerung der Wärmeeinflußzonen, die zur Gefährdung der in der Nähe befindlichen Konstruktionselemente wie Dichtungen oder Kugel des Kugelhahngehäuses führen können, ergeben. Eng positionierte Schweißnähte, sich kreuzende Schweißnähte sowie mehrere Schweißnähte im Kraftfluß führen zu einer Beeinträchtigung der Festigkeit. Schließlich sind zur Positionierung der zusammenzufügenden Bauteile beim Schweißen formschlüssige Elemente wie Zentriereinsätze vorgesehen, wodurch innere Spalte entstehen, in die Medium eindringen und Spaltkorrosion hervorrufen kann.

Aus DE 203 05 266 U1 ist ein vollverschweißtes Kugelhahngehäuse bekannt, bei dem ein zylindrisches Gehäuserohr verwendet wird, beidseitig von dem jeweils ein Anschlußstutzen zum Anschluß an Rohrleitungen angeschweißt ist und das eine Öffnung aufweist, in das ein sich senkrecht zur Längsachse des Gehäuserohrs erstreckender Dom zur Aufnahme einer Betätigungseinrichtung für eine Kugel eingesetzt und mit dem Gehäuserohr verschweißt ist. Dazu ist der Dom an seinem in die Öffnung einzusetzenden Ende mit einer kegeligen Andrehung zu versehen, während die Öffnung eine zu der Andrehung korrespondierende Kegelbohrung ist. Das Gehäuserohr und die Anschlußstutzen haben fein geschlichtete Fügeflächen aufzuweisen. Ein derartiges Kugelhahngehäuse ist in der Herstellung aufwendig und benötigt drei längs zwei radialen Schweißnähten verschweißte Teile sowie einen eingeschweißten Dom, der zudem zu einer fehlerhaften Sattelnaht aufgrund der dort vorhandenen, komplexen Geometrie führen kann. Außerdem bedingen die drei Schweißnähte eine erhebliche Wärmebelastung während des Schweißvorgangs und es kann auch hier zu einer Überlagerung der Wärmeeinflußzonen kommen. Ein sehr sorgfältiges und vorsichtiges Schweißen verteuert die Herstellung. Das Gehäuserohr kann ferner hohe Eigenspannungen aufweisen, die nicht abgebaut werden und zu Spannrißkorrosion führen können.

Das Dokument D1 (US 6,302,132) offenbart Kugelhähne, die aus einem PolymerWerkstoff gefertigt sind, und die direkt in die Rohrleitung verschweißt werden können. Eine Sitzhalterung, die das Dichtelement festhält, ist auf beiden Seiten der Kugel in einer Ausnehmung des Gehäuses durch eine Schnappverbindung fixiert. Diese Kunststoff Armaturen sind nicht für hohe Belastungen ausgelegt, und können daher axialen Kräften nicht standhalten, wie das bei Metall-Armaturen der Fall ist.

Aufgabe der Erfindung ist es daher, ein Kugelhahngehäuse nach dem Oberbegriff des Anspruchs 1 zu schaffen, das bei einfacher Herstellung eine hohe Belastbarkeit aufweist.

Diese Aufgabe wird entsprechend den Merkmalen des Anspruchs 1 gelöst.

Hiernach ist ein Kugelhahngehäuse vorgesehen, umfassend miteinander verschweißte Gehäuseabschnitte, die zu damit einstückig ausgebildeten, axial zueinander ausgerichteten, einander gegenüber liegenden Anschlußstutzen zum Anschluß an Rohrleitungen hin im wesentlichen konisch verjüngt sind, wobei eine Öffnung zum Durchführen einer Schaltwelle vorgesehen ist und ein erster, mit einem der Anschlußstutzen versehener, eigenspannungsfreier Gehäuseabschnitt benachbart zu einer quer zur Gehäuselängsachse mit Abstand zu der Öffnung für die Schaltwelle verlaufenden Schweißnaht eine gehäuseinnenseitige Schulter aufweist, die den Bereich der Schweißnaht nach innen hin abdeckt. Ein zweiter eigenspannungsfreier Gehäuseabschnitt, der mit einem derAnschlußstutzen und mit einer die Öffnung zum Durchführen einer Schaltwelle bildenden Gehäuseaushalsung versehen ist, und ein ringförmiger Anschlußfortsatz des ersten Gehäuseabschnitts, der dessen Schulter mit Abstand und zurückversetzt umgibt, mit dem zweiten Gehäuseabschnitt verschweißt ist, sind vorgesehen.

Dementsprechend werden nur zwei miteinander verschweißte Gehäuseabschnitte benötigt, die eigenspannungsfrei als Guß- oder Schmiedeteile hergestellt sind, wobei auch nur eine einzige Schweißnaht anzubringen ist und die Einbauteile wie Dichtungen und Kugel beim Schweißen etwa vor Schweißspritzern und Wärme geschützt sind. Undichtigkeiten und Leckagen werden somit verhindert. Derartige Gehäuseabschnitte können spannungstechnisch durch Kombination eines in etwa kugeligen oder gegebenenfalls zylinderförmigen Grundkörpers mit Konen als Anschlußstutzen bei minimalem Materialeinsatz hinsichtlich der Belastungen und damit Festigkeits- und Dichtheitsanforderungen optimiert werden, wobei zweckmäßigerweise die Wandstärke für den jeweiligen Betriebsdruck spannungsorientiert ausgelegt ist. Der Kraftfluß wird dabei so geleitet, daß Einflüsse auf das Dichtsystem minimiert werden. Somit ist das Kugelhahngehäuse insbesondere für den Erdeinbau und die dort auftretenden typischen Belastungen geeignet. Eine Anpassung an weitere Anwendungsbereiche ist ohne weiteres möglich. Beispielsweise kann für höhere Druckstufen eine doppelte Gehäuselagerung der Kugel vorgesehen sein, wobei keine zusätzlichen Schweißungen erforderlich sind.

Beim Schweißen wird ein günstiger Wärmeabfluß ermöglicht, so daß insofern Schädigungen vermieden werden.

Zum Schweißen sind keine zusätzlichen Hilfsmittel in Form von Zentrierungen notwendig, um eine qualitätsgerechte Schweißung zu erzielen. Die einzige Schweißnaht befindet sich in der Hauptkraftflußrichtung.

Spaltkorrosion an der Schaltwellendurchführung tritt nicht auf. Da die Schweißnaht gut zugänglich ist, kann sie auch während des Betriebs durch Ultraschall- oder Röntgenstrahlung geprüft werden.

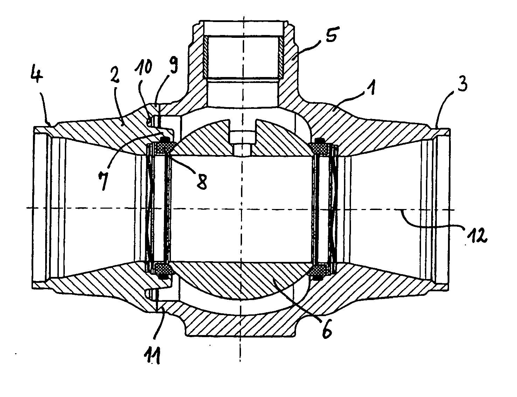

Die Erfindung wird nachstehend anhand eines in der beigefügten Abbildung dargestellten Ausführungsbeispiels näher erläutert, in der ein Kugelhahngehäuse im Schnitt dargestellt ist.

Der dargestellte Kugelhahn umfaßt ein Kugelhahngehäuse, das aus zwei eigenspannungsfreien Gehäuseabschnitten 1, 2 besteht, die sich jeweils zu einstückig damit ausgebildeten, axial zueinander ausgerichteten, einander gegenüber liegenden Anschlußstutzen 3, 4 zum Anschluß an entsprechende Rohrleitungen hin im wesentlichen konisch verjüngen.

Der Gehäuseabschnitt 1 ist mit einer Gehäuseaushalsung 5 versehen, die zum Durchführen einer - nicht dargestellten - Schaltwelle für eine im Inneren des Kugelhahngehäuses zum Öffnen und Schließen des Kugelhahns drehbar und gegenüber dem Kugelhahngehäuse abgedichtet gelagerten Kugel 6 dient.

Der Gehäuseabschnitt 2 besitzt benachbart zum Gehäuseabschnitt 1 eine gehäuseinnenseitige, in den Gehäuseabschnitt 1 hineinragende, ringförmige Schulter 7, die innenseitig eine Dichtungsanordnung 8 für die Kugel 6 aufnimmt und außenseitig gegenüber einem ringförmigen Anschlußfortsatz 9 durch eine stirnseitige Ausnehmung 10 beabstandet ist.

Der Anschlußfortsatz 9 des Gehäuseabschnitts 2 ist mit einem korrespondierenden Wandungsteil 11 des Gehäuseabschnitts 1 durch eine quer zur Längsachse 12 des Kugelhahngehäuses, d.h. in einer Radialebene verlaufende Schweißnaht verschweißt, die nach innen hin durch die Schulter 7 abgeschirmt und zweckmäßigerweise so ausgeführt ist, daß sie beim Erkalten frei Schrumpfen kann, um Wärmespannungen abzubauen.

Der Kugelhahn wird komplett zusammengebaut und anschließend werden die beiden Gehäuseabschnitte 1, 2 miteinander verschweißt. Die Schaltwelle mit Schaltwellendurchführung kann dann anschließend eingesetzt werden.

## Patentansprüche

1. Kugelhahngehäuse umfassend miteinander verschweisste, aus Guss- oder Schmiedeteilen bestehende Gehäuseabschnitte (1, 2) mit einstückig damit ausgebildeten, axial zueinander ausgerichteten, einander gegenüberliegenden Anschlussstutzen (3, 4) und eine gegenüber dem Gehäuse abgedichtet gelagerte Kugel (6), wobei die Gehäuseabschnitte (1, 2) zu den Anschlussstutzen (2, 3) hin konisch verjüngt sind und wobei eine Öffnung zum Durchführen einer Schaltwelle vorgesehen ist und ein erster, mit einem der Anschlussstutzen versehener, eigenspannungsfreier Gehäuseabschnitt (2) benachbare zu einer quer zur Gehäusetängsachse (12) mit Abstand zu der Öffnung für die Schaltwelle verlaufenden Schweissnaht eine gehäuseinnenseitige Schulter, (7) aufweist, die innenseitig eine Dichtungsanordnung (8) für die Kugel (6) aufnimmt und den Bereich der Schweissnaht nach innen hin abdeckt, **dadurch gekennzeichnet, dass** ein zweiter eigenspannungsfreier Gehäuseabschnitt (1) neben dem Ansbihlussstutzen (3) mit einer die Öffnung zum Durchführen einer Schaltwelle bildenden Gehäuseaushalsung (5) versehen ist und dass der erste Gehäuseabschnitt (2) einen ringförmigen Anschiussfortsatz (9) aufweist, der die Schulter (7) des ersten Gehäuseabschnittes (2) mit Abstand und zurückversetzt umgibt und mit dem zweiten Gehäuseabschnitt (1) verschweisst ist,

2. Kugelhahngehäuse nach einem der Anspruch 1, **dadurch gekennzeichnet, dass** im Hauptkraftfluss eine einzige Schweissnaht vorgesehen ist.

3. Kugelhahngehäuse nach einem der Ansprüche 1 bis 2, **dadurch gekennzeichnet, dass** die Gehäuseabschnitte (1, 2) einen kugelförmigen Grundkörper bilden.

4. Kugelhahngehäuse nach einem der Ansprüche 1 bis 2, **dadurch gekennzeichnet, dass** die Gehäuseabschnitte (1, 2) einen zylinderförmigen Grundkörper bilden.

5. Kugelhahngehäuse nach Anspruch 3 oder 4, **dadurch gekennzeichnet, dass** sich der Grundkörper in Richtung auf die Anschlussstutzen (3, 4) konisch verjüngt.

6. Kugelhahngehäuse nach einem der Ansprüche 1 bis 5, **dadurch gekennzeichnet, dass** eine schweissfreie Gehäuselagerung der Kugel (6) vorgesehen ist.

## Claims

1. A ball valve housing, comprising housing sections (1, 2) which are welded together, consist of cast or welded parts and comprise connecting pieces (3, 4) which are integrally arranged with the same, aligned axially with respect to each other and are opposite of each other, as well as a ball (6) held in a sealed manner relative to the housing, with the housing sections (1, 2) being conically tapering towards the connecting pieces (2, 3) and with an opening being provided for passing through a stem, and a first housing section (2) which is provided with a connecting piece and is free from internal stress comprises a shoulder (7) on the inside of the housing adjacent to a weld seam extending transversally to the longitudinal axis (12) of the housing at a distance from the opening for the stem, which shoulder receives a sealing arrangement (8) for the ball on the inside and covers the region of the weld seam to the inside, **characterized in that** a second housing section (1) which is free from internal stress is provided adjacent to the connecting piece (3) with a necked-out opening (5) of the housing forming the opening for guiding through a steam, and the first housing section (2) comprises an annular connection extension (9) which encloses the shoulder (7) of the first housing section (2) in a spaced and offset way and is welded together with the second housing section (1).

2. A ball valve housing according to one of the claim 1, **characterized in that** a single weld seam is provided in the main power flow.

3. A ball valve housing according to one of the claims 1 to 2, **characterized in that** the housing sections (1, 2) form a spherical base body.

4. A ball valve housing according to one of the claims 1 to 2, **characterized in that** the housing sections (1, 2) form a cylindrical base body.

5. A ball valve housing according to claim 3 or 4, **characterized in that** the base body tapers conically in the direction towards the connecting piece (3, 4).

6. A ball valve housing according to one of the claims 1 to 5, **characterized in that** weld-free bearing of the housing of the ball (6) is provided.

## Revendications

1. Corps de robinet à boisseau sphérique comprenant des parties de corps (1, 2) soudées entre elles, faites de pièces en fonte ou forgées, avec des tubulures de raccordement (3, 4) formées sur celles-ci, dirigées l'une vers l'autre dans le sens axial et se faisant face, et une boule (6) supportée de manière étanche vis-à-vis du corps, dans lequel les parties de corps (1, 2) sont resserrées en forme de cône vers les tubulures de raccordement (2, 3) et dans lequel une ouverture est prévue pour le passage d'un arbre de manoeuvre et une première partie de corps (2) munie des tubulures de raccordement et dépourvue de tensions propres présente à proximité d'une soudure passant perpendiculairement à l'axe longitudinal du corps (12) à distance de l'ouverture pour l'arbre de manoeuvre un épaulement (7) situé sur le côté intérieur du corps, qui reçoit sur le côté intérieur un dispositif d'étanchéité (8) pour la boule (6) et recouvre la zone de la soudure vers l'intérieur, **caractérisé en ce qu'**une deuxième partie de corps (1) sans tensions propres présente, outre les tubulures de raccordement (3), un collet extradé (5) formant l'ouverture pour le passage d'un arbre de manoeuvre et **en ce que** la première partie de corps (2) présente une saillie de raccordement annulaire (9) qui entoure l'épaulement (7) de la première partie de corps (2) à distance et en retrait et qui est soudée avec la deuxième partie de corps (1).

2. Corps de robinet à boisseau sphérique selon la revendication 1, **caractérisé en ce qu'**une seule soudure est prévue dans le flux principal de forces.

3. Corps de robinet à boisseau sphérique selon l'une des revendications 1 à 2, **caractérisé en ce que** les parties de corps (1, 2) forment un corps de base sphérique.

4. Corps de robinet à boisseau sphérique selon l'une des revendications 1 à 2, **caractérisé en ce que** les parties de corps (1, 2) forment un corps de base cylindrique.

5. Corps de robinet à boisseau sphérique selon la revendication 3 ou 4, **caractérisé en ce que** le corps de base se resserre en forme de cône en direction des tubulures de raccordement (3, 4).

6. Corps de robinet à boisseau sphérique selon l'une des revendications 1 à 5, **caractérisé en ce qu'**il est prévu un support dans le corps de la boule (6) sans soudure.
